(19)

**Europäisches Patentamt**
**European Patent Office**
**Office européen des brevets**

(11) **EP 2 808 842 B1**

(12) **EUROPEAN PATENT SPECIFICATION**

(45) Date of publication and mention
of the grant of the patent:
**16.08.2017 Bulletin 2017/33**

(51) Int Cl.:
***G06T 7/579*** *(2017.01)*

(21) Application number: **13190218.1**

(22) Date of filing: **25.10.2013**

(54) **An apparatus and method for tracking and reconstructing three-dimensional objects**

Vorrichtung und Verfahren zur Verfolgung und Rekonstruktion dreidimensionaler Objekte

Appareil et procédé permettant de suivre et de reconstruire des objets tridimensionnels

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2013 EP 13170117**

(43) Date of publication of application:
**03.12.2014 Bulletin 2014/49**

(73) Proprietor: **Technische Universität München**
**80333 München (DE)**

(72) Inventors:
• **Sturm, Jürgen**
**80787 München (DE)**
• **Cremers, Daniel**
**80939 München (DE)**

(74) Representative: **Lucke, Andreas**
**Boehmert & Boehmert**
**Anwaltspartnerschaft mbB**
**Pettenkoferstrasse 22**
**80336 München (DE)**

(56) References cited:
**GB-A- 2 478 067**

• **Daniel Ricão Canelhas: "Scene Representation, Registration and Object Detection in a Truncated Signed Distance Function Representation of 3D Space", International Master's Thesis, 12 November 2012 (2012-11-12), pages 1-78, XP055111125, Retrieved from the Internet: URL:http://oru.diva-portal.org/smash/recor d.jsf?pid=diva2:548296 [retrieved on 2014-04-01] & Daniel Ricao Canelhas: "Title: Scene Representation, Registration and ObjectDetection in a Truncated Signed Distance Function Representation of 3D Space", , 12 November 2012 (2012-11-12), pages 1-2, XP055111420, Retrieved from the Internet: URL:http://oru.diva-portal.org/smash/recor d.jsf?pid=diva2:548296 [retrieved on 2014-04-02]**
• **Anonymous: "Least squares - Wikipedia, the free encyclopedia", Wikipedia, 30 March 2013 (2013-03-30), pages 1-16, XP055111205, Retrieved from the Internet: URL:http://en.wikipedia.org/w/index.php?ti tle=Least_squares&oldid=547861529 [retrieved on 2014-04-01]**
• **CURLESS B ET AL: "A VOLUMETRIC METHOD FOR BUILDING COMPLEX MODELS FROM RANGE IMAGES", COMPUTER GRAPHICS PROCEEDINGS 1996 (SIGGRAPH). NEW ORLEANS, AUG. 4 - 9, 1996; [COMPUTER GRAPHICS PROCEEDINGS (SIGGRAPH)], NEW YORK, NY : ACM, US, 4 August 1996 (1996-08-04), pages 303-312, XP000682746,**

(Cont. next page)

EP 2 808 842 B1

- **RICHARD A NEWCOMBE ET AL: "KinectFusion: Real-time dense surface mapping and tracking", MIXED AND AUGMENTED REALITY (ISMAR), 2011 10TH IEEE INTERNATIONAL SYMPOSIUM ON, IEEE, 26 October 2011 (2011-10-26), pages 127-136, XP032028050, DOI: 10.1109/ISMAR.2011.6092378 ISBN: 978-1-4577-2183-0**

**Description**

Field of the Invention

The present invention relates to an apparatus and method for tracking a three-dimensional object located in space, and for providing a three-dimensional reconstruction of such an object. In particular, the invention relates to the reconstruction of three-dimensional objects for 3D printing.

Background and Prior Art

3D simultaneous localization and mapping (SLAM) is a highly active research area as it is a pre-requisite for many robotic tasks such as localization, navigation, exploration, and path planning. To be truly useful, such systems require the fast and accurate estimation of the robot pose or camera pose as well as the scene geometry. The straightforward acquisition of 3D models is also of interest for augmented reality applications including computer games, home decoration, and refurbishment measures. For example, designers and architects can benefit from this technology as it allows them to cost-effectively scan a room or a piece of furniture before starting the actual work.

Printing three-dimensional reconstructions of living beings or other objects in the real world is another application for which fast real-time camera tracking and three-dimensional reconstruction are desirable.

Simultaneous localization and mapping refers to both the estimation of the camera pose and the mapping of the environment. This requires a suitable representation of the scene geometry, and the choice of this representation strongly influences the efficiency of pose estimation and map optimization.

Laser-based localization and mapping approaches often use scan matching or the iterated closest point algorithm (ICP) to estimate the motion between frames. Graph SLAM methods use these motion estimates as input to construct and optimize a pose graph, as has been described by R. Kümmerle, G. Grisetti, H. Strasdat, K. Konolige and W. Burgard; "g2o: A general framework for graph optimization"; ICRA, 2011. Typically, these methods render a joint map only after pose graph optimization, and this map is generally not used for further pose optimization. The resulting maps are often represented as occupancy grid maps or octrees, and are therefore well suited for robot localization or path planning, cf. K.M. Wurm, A. Hornung, M. Bennewitz, C. Stachniss and W. Burgard; "OctoMap: A probabilistic, flexible, and compact 3D map representation for robotic systems "; Workshop on Best Practice in 3D Perception and Modeling for Mobile Manipulation at ICRA, 2010. P. Henry, M. Krainin, E. Herbst, X. Ren and D. Fox; "RGB-D mapping: Using depth cameras for dense 3D modeling of indoor environments"; 2010 were the first to apply the Graph SLAM approach to RGB-D data using a combination of visual features and ICP. A similar system was recently presented by F. Endres, J. Hess, N. Engelhard, J. Sturm, D. Cremers and W. Burgard; "An evaluation of the RGB-D SLAM systems"; ICRA, May 2012, and extensively evaluated on a public benchmark in J. Sturm, N. Engelhard, F. Endres, W. Burgard, and D. Cremers; "A benchmark for evaluation of RGB-D SLAM systems"; IROS, 2012.

R.A. Newcombe, S. Izadi, O. Hilliges, D. Molyneaux, D. Kim, A.J. Davison, P. Kohli, J. Shotton, S. Hodges, and A.W. Fitzgibbon; "KinectFusion: Real-time dense surface mapping and tracking"; ISMAR, pages 127-136, 2011; recently demonstrated with their famous KinectFusion approach that dense reconstruction is possible in real-time by using a Microsoft Kinect sensor. To represent the geometry, Newcombe *et al.* employ a signed distance function (SDF) and use ICP in a coarse-to-fine manner to estimate the camera motion. For each image, the algorithm first renders a point cloud from the SDF at the previous pose using ray tracing and subsequently aligns this with the next depth image. Point correspondences are found using projective data association and the point-to-plane distance.

However, the approaches based on the iterated closest point algorithm are sometimes too slow for real-time applications, and do not achieve the accuracy that is needed in many applications.

Moreover, the techniques known in the state of the art are not well-suited for three-dimensional printing, as they are in general incomplete when acquired with a hand-held sensor, not watertight, unsegmented and in many other respects not optimized for cost-effective fabrication by means of 3D printers.

In his master thesis entitled "Scene Representation, Registration and Object Detection in a Truncated Signed-Distance Function Representation of 3D Space", Orebro University, 2012, D.R. Canelhas employs a signed-distance function for tracking and reconstructing three-dimensional objects.

Weighted difference functions that quickly taper off away from the surface are described in B. Curless and M. Levoy, "A Volumetric Method for Building Complex Models from Range Images", Computer Graphics Proceedings 1996, pages 303-312.

What is needed is an improved method and apparatus for real-time camera tracking and three-dimensional reconstruction that is both fast and accurate, and suitable for use in three-dimensional printing applications.

Overview of the Present Invention

These objectives are achieved with an apparatus and method for tracking and reconstructing three-dimensional objects with the features of independent claims 1 and 6, respectively. The dependent claims relate to preferred embodiments.

An apparatus for tracking and reconstructing three-dimensional objects according to the present invention comprises the features of claim 1. An object, in the sense of the present invention, can be any object that can be captured by means of an image acquisition unit, such as a camera. Objects in the sense of the present invention hence encompass both living beings, such as humans or animals, or inanimate objects such as furniture or household items.

The inventors found that the relative position of the image acquisition unit with respect to the object can be obtained directly from fitting image depth data provided by the image acquisition unit to the function representing the surface of the object. This is an important improvement over conventional ICP techniques, which are employed, for instance, in the KinectFusion software and which rely on the conversion of signed distance functions into point clouds and the comparison between point clouds. The present invention does not require such an additional conversion, and hence is computationally more efficient. In addition, the accuracy of the reconstruction can be enhanced.

A direct determining of the relative position of the image acquisition unit with respect to said object can be understood, in the sense of the present invention, not to require an intermediate conversion to point clouds or the use of the iterated closest point algorithm.

Said position of said image acquisition unit, in the sense of the present invention, may comprise a location of the image acquisition unit in space and/or an orientation or pose of the image acquisition unit in space, in particular an orientation or pose with respect to said object.

In a preferred embodiment, said data processing unit is adapted to determine said relative position of said image acquisition unit with respect to said object by maximizing an observation likelihood given in terms of said position of said image acquisition unit and said function representing said surface. The observation likelihood may be maximized for said position.

Preferably, said function representing said surface is chosen such that said surface of said object corresponds to an equipotential surface of said function. In this configuration, the value of the function may be a constant on said surface of said object, but may have other values on points in space not corresponding to said surface.

In a preferred embodiment, said function representing said surface may be a signed distance function.

Preferably, said data processing unit may be adapted to iteratively update said function representing said surface based on an observed relative position of said image acquisition unit with respect to said object.

In a preferred embodiment, said data processing unit is adapted to update said function by maximizing an observation likelihood given in terms of a difference between a distance of said image acquisition unit from said surface, said distance being determined from said relative position, and a corresponding distance observed by means of said image acquisition unit. Said observation likelihood can be maximized for said function.

The inventors have obtained good results with an iterative approach wherein, in a first step, the position of the image acquisition unit is estimated based on said function representing said surface, and wherein, in a subsequent second step, the function representing said surface is updated based on the newly-computed position of the image acquisition unit. This sequence may be repeated any number of times, as needed.

Said difference between the distance of said image acquisition unit from said surface determined from said relative position and the corresponding distance observed by means of said image acquisition unit may be a weighted difference.

Preferably, said weights are exponential weights.

The weights may be chosen such that they have a minimum value larger than zero, irrespective of a value of said difference.

The inventors found that a weight function that does not decrease to zero is particularly suitable for applications in 3D printing, since it ensures that small holes that could stem from occlusions are automatically filled. This allows for the design of "watertight" 3D models. Yet, selecting the minimum value sufficiently small ensures that the values can be quickly overwritten when better observations become available.

In a preferred embodiment, said data processing unit may be adapted to carve an interior of said reconstruction of said object by transforming said function representing said surface.

In particular, volumetric pixels located in an interior portion of said object may be transformed into volumetric pixels located externally of said object, such as by mirroring said volumetric pixels at said surface of said object.

In a preferred embodiment, said data processing unit is adapted to determine a center of mass of said object from said reconstruction.

Said center of mass may be determined from said function representing said surface.

Determining the center of mass allows adding a stand to said object, so to ensure that a 3D object may be stably supported after having been printed.

Said stand may be centered at a position that corresponds to a projection of a center of mass of said object, in particular a vertical projection of a center of mass of said object.

Said processing unit may be adapted to determine a mesh representing said object, in particular a triangle mesh, wherein said mesh is computed from said function representing said surface.

Said mesh data may then be sent to a 3D printer for a three-dimensional printing of a representation of said object, or may be used for any other data processing that follows.

A color value may be assigned to each voxel.

In a preferred embodiment, said apparatus comprises said image acquisition unit, said image acquisition unit being adapted to acquire said image data of said scene containing said three-dimensional object.

Said image acquisition unit may be a camera, in particular a camera comprising an image depth sensor.

Said image acquisition unit may provide color data alongside said image depth data.

Said image acquisition unit may be portable so that it can be moved with respect to said three-dimensional object. However, the image acquisition unit may also be static, and the object may be moved relative to the image acquisition unit.

The invention also relates to a corresponding method for tracking and reconstructing three-dimensional objects, comprising the features of claim 6. Preferably, said step of determining said relative position of said image acquisition unit with respect to said object comprises a step of maximizing an observation likelihood given in terms of said position of said image acquisition unit and said function representing said surface. Said function representing said surface may be chosen such that said surface of said object corresponds to an equipotential surface of said function.

In a preferred embodiment, said function representing said surface is a signed distance function.

In a preferred embodiment, the method comprises the step of iteratively updating said function representing said surface based on an observed relative position of said image acquisition unit with respect to said object.

Updating said function may comprise the step of maximizing an observation likelihood given in terms of a difference between a distance of said image acquisition unit from said surface determined from said relative position, and a corresponding distance observed by means of said image acquisition unit. Said observation likelihood may be maximized for said function.

In a preferred embodiment, said difference is a weighted difference.

Said weights may be exponential weights.

In a preferred embodiment, said weights are chosen such that they have a minimum value larger than zero, irrespectively of a value of said difference.

Preferably, the method comprises a step of carving an interior of said reconstruction of said object by transforming said function representing said surface, in particular by transforming volumetric pixels located in an interior portion of said object into volumetric pixels located in an exterior portion of said object.

In a preferred embodiment, the method comprises a step of determining a center of mass of said object from said reconstruction.

In particular, said center of mass may be determined from said function representing said surface.

In a preferred embodiment, the method comprises a step of adding to said reconstruction of said object a stand for said object.

Said stand may be centered at a position that corresponds to a projection of a center of mass of said object.

In a preferred embodiment, the method comprises a step of determining a mesh representing said object, in particular a triangle mesh.

Said mesh may be computed from said function representing said surface.

Preferably, the method further comprises a step of acquiring said image data from said scene containing said three-dimensional object, in particular by means of an image acquisition unit.

The invention also relates to a storage medium for storing computer-readable instructions, wherein said computer-readable instructions, when processed in a data processing unit, cause said processing unit to implement a method with some or all of the steps described above.

Description of Preferred Embodiments

The apparatus and method for tracking and reconstructing three-dimensional objects will now be explained with reference to specific embodiments and examples. In the first part of the description, an approach for camera tracking by means of a signed distance function according to an embodiment of the invention will be detailed. Based on the estimated camera pose given by the previous signed distance function, in a next step the signed distance function may then be updated based on the newly-computed camera pose.

In the preferred embodiments described below, updating the signed distance function may involve a comparison of the depth of the voxel cell computed based on the current camera position/pose with the observed depth. The difference between these depths is weighted with an exponential weight function. Based on the updated signed distance function, a meshing and colorization may then be performed in a subsequent step.

The description discusses several examples, and compares the inventive method against previous approaches, such as approaches based on the iterated closest point algorithm.

The description also discusses applications of the invention to the scanning and printing of objects using three-dimensional printing technology. This second part also describes model-post processing, such as carving to provide a hollow model or addition of a stand for the model.

The specific embodiments and examples will be described with reference to the accompanying drawings, in which:

Fig. 1          illustrates the determination of the camera pose from fitting image depth data to a signed distance function;

Fig. 2a and 2b      schematically illustrate the computation of the distance between each voxel and the observed surface by means of (a) a projective point-to-point distance and (b) a point-to-plane distance, respectively;

Fig. 3a to 3f      show various examples of weighting functions for weighting the difference between the image acquisition unit and the surface;

Fig. 4          is a schematic drawing illustrating a setup for reconstructing the surface of a three-dimensional object for a 3D printing application; and

Fig. 5          is a flow diagram illustrating the steps for tracking and reconstructing a three-dimensional object for a 3D printing application.

### (a) Setup and Notation

For illustrating the inventive method and apparatus we will assume that the three-dimensional object that shall be tracked and reconstructed, such as a person sitting on a chair or a piece of furniture located in a closed room, shall be described in terms of three-dimensional Cartesian coordinates $x \in \mathbb{R}^3$. The object is monitored by means of a camera capable of acquiring a depth image alongside a conventional RGB image. An example for such a camera is Microsoft's Kinect Camera. The relative movement of the object with respect to the camera will be denoted in terms of a rotation $R \in S0(3)$ and a translation $t \in \mathbb{R}^3$. At each time step, the RGB-D camera outputs a three-dimensional color (RGB) image and a depth (D) image, to which we refer by the functions

$$I_{RGB} \colon \mathbb{R}^2 \to \mathbb{R}^3 \ and \ I_d \colon \mathbb{R}^2 \to \mathbb{R}. \tag{1}$$

We assume that the depth image is already registered to the color image, so that pixels correspond one-to-one. In practice, this registration already happens internally in the RGB-D camera, such as Microsoft's Kinect camera, and uses a pre-stored factory calibration.

We assume a pinhole camera model with intrinsic parameters $f_x$, $f_y$, corresponding to the focal length and parameters $c_x$, $c_y$, corresponding to the optical center. According to this model, a 3D point $\underline{x} = (x,y,z)$ is projected onto the image plane by

$$\pi(x, y, z) = \left( \frac{f_x x}{z} + c_x , \frac{f_y y}{z} + c_y \right). \tag{2}$$

The 3D point corresponding to a pixel $(i,j) \in \mathbb{R}^2$ with depth $z = I_d\,(i,j)$ can then be reconstructed by means of the following equation,

$$\rho(i, j, z) = \left( \frac{(i-c_x)z}{f_x} , \frac{(j-c_y)z}{f_y} , z \right). \tag{3}$$

The geometry can be represented using a signed distance function (SDF) stored in a voxel grid. In this specific embodiment, we follow an iterative approach where we first estimate the camera position and pose in terms of the rotation R and translation t given the previous signed distance function (SDF), and then update the SDF based on a newly computed camera position and pose.

## (b) Camera Tracking

We will first describe how to estimate the camera motion given a signed distance function (SDF) and a depth image. We assume that we already have a representation of the geometry acquired from the previous depth image given by the SDF $\psi: \mathbb{R}^3 \to \mathbb{R}$. This function returns for any point $x \in \mathbb{R}^3$ the signed distance from x to the surface of the object that shall be tracked, e. g. $\psi(x) = 0$ holds for all points x lying on the surface, $\psi(x) < 0$ for free space, and $\psi(x) > 0$ for occupied space, or vice versa. The idea is now to use the SDF to construct an error metric that describes how well a depth image $I_d$ fits to the SDF.

For each pixel (i, j), we have its depth $z = I_d(i,j)$. From this information, we can reconstruct the corresponding 3D point $x_{i,j}$ in the local coordinate system of the camera by means of Equation (3). We can transform this point to the global coordinate frame by means of

$$x_{ij}^G = R\boldsymbol{x}_{ij} + \boldsymbol{t}, \tag{4}$$

and now query the SDF to read out its distance from the surface. If the SDF and the camera pose are correct, the reported value should be zero.

The camera rotation R and the translation t according to Equation (1) should be determined to satisfy the criterion that all re-projected points from the depth image lie as close as possible to the zero-crossing in the SDF, corresponding to the surface, i. e.,

$$\{\boldsymbol{x} \mid \psi(\boldsymbol{x}) = 0\}. \tag{5}$$

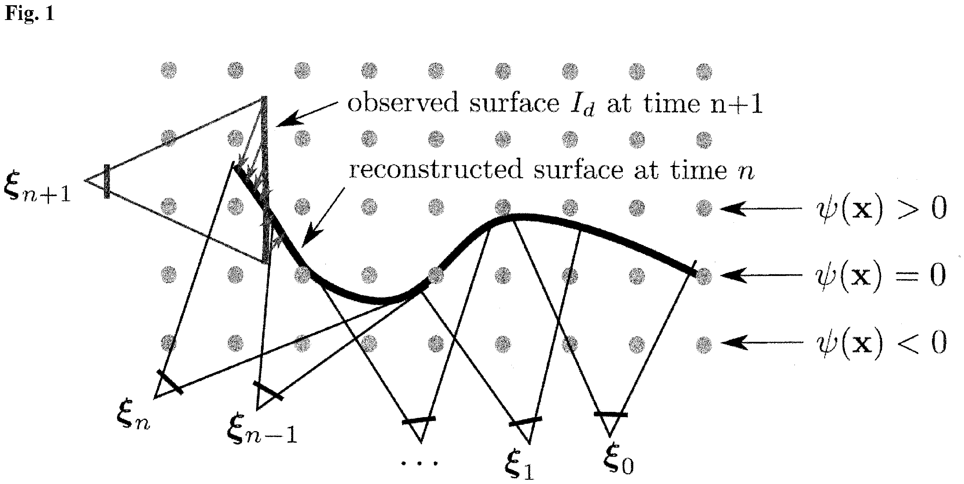

This approach for iteratively estimating the camera pose $\xi$ such that the SDF values between the re-projected 3D points are minimized is illustrated schematically in Fig. 1. The surface of the object is given in terms of the equipotential surface $\psi(x) = 0$ of the signed distance function $\psi$. The SDF is constructed from the first n depth images and corresponding camera poses $\xi_1, ..., \xi_n$. Based on these values, the current camera pose $\xi_{n+1}$ is determined in an optimization that minimizes the SDF values between the re-projected 3D points.

Assuming Gaussian noise in the depth measurement of the camera and that all pixels are independently and identically distributed, the likelihood of observing a depth image $I_d$ from the camera pose parameters R, t becomes

$$p(I_d \mid R, \boldsymbol{t}) \propto \prod_{i,j} exp\left(-\psi\big(R\boldsymbol{x}_{ij} + \boldsymbol{t}\big)^2\right). \tag{6}$$

Our goal is now to find the camera pose R*, t* that maximizes this likelihood, i. e.,

$$(R^*, t^*) = \arg\max_{R, t} p(I_d \mid R, \boldsymbol{t}). \tag{7}$$

We found that subsequent computations can be significantly simplified by taking the negative logarithm and defining the error function

$$E(R, \boldsymbol{t}) = \sum_{i,j} \psi\big(R\boldsymbol{x}_{ij} + \boldsymbol{t}\big)^2, \tag{8}$$

where i, j iterate over all pixels in the depth image (e. g. 640 $\times$ 480 pixels). All points on the surface of the object correspond to $\psi = 0$. Therefore, in a noise-free case, the error function would return zero, as all points would exactly re-project onto the surface. In practice, however, due to noise the error function will never be exactly zero. Moreover, it may happen that some pixels in the depth image are not defined. Missing values may be due to occlusions or poor reflectance. In addition, the voxel grid underlying the signed distance function has a finite size and may likewise have missing values. These problems may be addressed by counting the number of evaluated pixels n and by normalizing the error accordingly.

The method for camera tracking according to the present invention is a significant improvement over the Kinect fusion algorithm, in which a second depth image is extracted from the SDF that is then aligned to the current depth image using the iterative closest point algorithm (ICP). The Kinect fusion approach requires an intermediate data association step between both point clouds, which is computationally involved. In addition, important information may be lost in the projection of the SDF onto the depth image, which then cannot be used in the iterations of ICP. The present invention avoids these disadvantages.

In order to minimize the error function in Equation (8), one may use a Lie algebra representation of rigid-body motion. In this approach, a rigid-body motion can be described with the 6-dimensional twist coordinates

$$\xi = (w_1, w_2, w_3, v_1, v_2, v_3), \tag{9}$$

where $(v_1, v_2, v_3)$ refer to the translational components and $(w_1, w_2, w_3)$ refer to the rotational components. Advantageously, the Lie algebra is a minimal representation, i. e., it has only six degrees of freedom. Using this notation, we can rewrite Equation (8) as

$$E(\xi) = \sum_{i,j} \psi_{ij}(\xi)^2$$

where we denote

$$\psi_{ij}(\xi) = \psi(R\boldsymbol{x}_{ij} + \boldsymbol{t}). \tag{11}$$

The objective is now to find the twist $\xi$ that minimizes the error function. To solve this, we may apply the Gauss-Newton method for nonlinear minimization. We start by linearizing $\psi$ around our initial pose estimate $\xi^{(0)}$ that we set to the estimated previous camera pose $\xi_n$ of time step n,

$$\psi(\xi) \approx \psi(\xi^{(k)}) + \nabla\psi(\xi^{(k)})^T(\xi - \xi^{(k)}), \tag{12}$$

where $\nabla\psi(\xi^{(k)})$ is the derivative of the signed distance function evaluated at $\xi^{(k)}$. Inserting into Equation (10) gives us a quadratic form that approximates the original error function, i. e.,

$$E_{approx}(\xi) = \sum_{i,j} (\psi_{ij}(\xi^{(k)}) + \nabla\psi_{ij}(\xi^{(k)})^T(\xi - \xi^{(k)}))^2.$$

$$\tag{13}$$

Minimizing by putting the derivative of Equation (13) to zero, i. e.,

$$\frac{d}{d\xi}E_{approx}(\xi) = 0, \tag{14}$$

we obtain

$$\sum_{i,j} \psi_{ij}(\xi^{(k)})\nabla\psi_{ij}(\xi^{(k)}) + \nabla\psi_{ij}(\xi^{(k)})\nabla\psi_{ij}(\xi^{(k)})^T(\xi - \xi^{(k)}) = 0.$$

$$\tag{15}$$

In Equation (15), $\psi_{ij}(\xi^{(k)})\nabla\psi_{ij}(\xi^{(k)})$ gives a 6-dimensional vector $b_{ij}$ for each pixel and $\nabla\psi_{ij}(\xi^{(k)})\nabla\psi_{ij}(\xi^{(k)})^T$ gives a 6×6-dimensional matrix $A_{ij}$ for each pixel. Defining

$$A := \sum_{i,j} \nabla \psi_{ij}(\xi^{(k)}) \nabla \psi_{ij}(\xi^{(k)})^T \in \mathbb{R}^{6 \times 6},$$

(16)

$$\boldsymbol{b} := \sum_{i,j} \psi_{ij}(\xi^{(k)}) \nabla \psi_{ij}(\xi^{(k)}) \in \mathbb{R}^{6 \times 1},$$

(17)

we can rewrite Equation (15) as

$$\boldsymbol{b} + A\xi - A\xi^{(k)} = 0.$$

(18)

From this, we can compute the camera pose that minimizes the linearized error as

$$\xi^{(k+1)} = \xi^{(k)} - A^{-1}\boldsymbol{b},$$

(19)

which can quickly be computed as A is only a 6×6 matrix. Based on this new estimate, we relinearize the original error function according to Equation (10) around $\psi$, and solve Equation (20) iteratively until convergence is reached. We may stop when either the change absolute value of $\xi^{(k+1)}$ - $\xi^{(k)}$ falls under a predetermined threshold value, or when a certain predetermined number of iterations is exceeded. Upon convergence, we may assign the final pose estimate to the current camera pose $\xi_{n+1}$.

All gradients can be computed numerically and efficiently in a standard desktop or laptop computer, which allows the method according to the present invention to be implemented with limited resources on standard equipment that is readily available commercially. The vectors $b_{ij}$ and matrices $A_{ij}$ are all independent, and may hence be computed in parallel on a graphics processor unit. This allows to implement the invention in real time and yet with high accuracy, which is a significant advantage over many of the prior art techniques.

(c) Representation of Signed Distance Functions (SDF)

In an embodiment of the invention, the SDF may be represented employing a discrete voxel grid of resolution m, m being a positive integer. We allocate two grids in memory, where one stores the averaged distances, and the other stores the sum of all weights, i. e.,

$$D: [0, \dots, m-1]^3 \mapsto \mathbb{R},$$

(20)

$$W: [0, \dots, m-1]^3 \mapsto \mathbb{R}.$$

(21)

Keeping track of the weight in each cell allows us to handle occlusions and sensor uncertainty appropriately, as will be described in detail in the subsequent subsection. Given a reconstruction volume of dimension width × height × depth, a world point $x = (x, y, z) \in \mathbb{R}^3$ is mapped to voxel coordinates

$$\begin{pmatrix} i \\ j \\ k \end{pmatrix} = m \begin{pmatrix} x/width + 0{,}5 \\ y/height + 0{,}5 \\ z/depth + 0{,}5 \end{pmatrix}.$$

(22)

Since (i,j,k) is generally non-integer, the signed distance value $\psi(x)$ may be determined by tri-linear interpolation between the values of its eight integer neighbors.

(d) Distance and Weighting Functions

In order to integrate a new depth image, we need to determine which voxels have been observed by the depth camera and update the distances accordingly. In an embodiment of the invention, this may be achieved by projecting each voxel onto the image plane. Compared to the ray casting techniques known in the prior art, this has the advantage that each voxel is visited exactly once, which is hard to ensure in the ray casting approach. Moreover, the operation that needs to be carried out for each voxel is independent of its neighbors, and hence this process can be easily parallelized on the graphics processor unit.

The strategy relies on the computation of the distance of each voxel to the observed surfaces represented by the current depth image. Computing the true distance of each voxel is time consuming, since it requires the computation of all shortest paths over the entire volume. Even efficient algorithms such as Fast Marching are not well suited for real-time applications. These problems may be addressed by resorting to an approximation based on the projective distance.

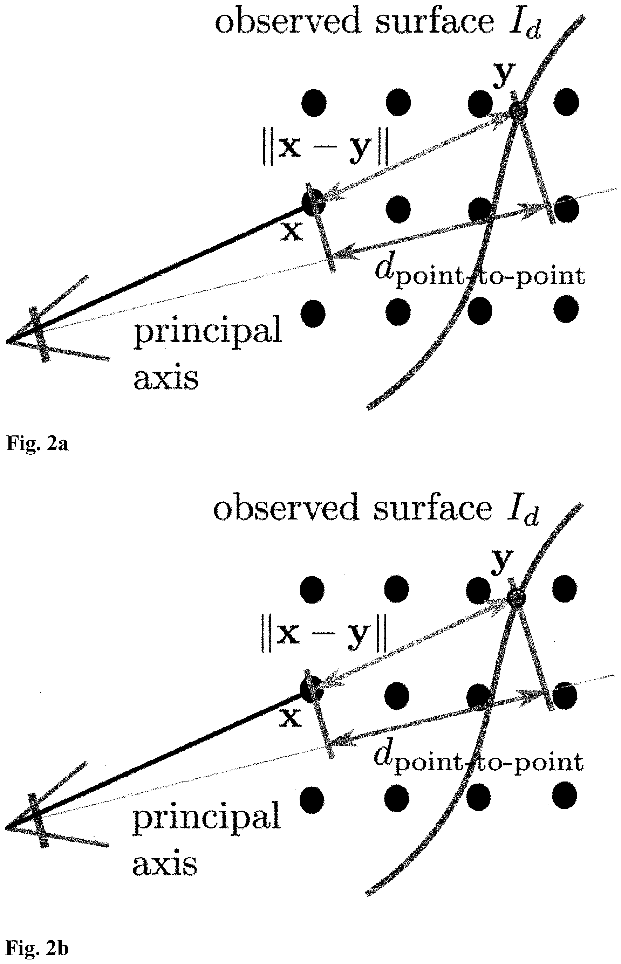

Examples for projective distances that will now be described with reference to Fig. 2 are the projective point-to-point distance (Fig. 2a) and the projective point-to-plane distance (Fig. 2b).

To determine the projective point-to-point distance, for each voxel we have its global (center) coordinates $x^G$. Given the pose of the current camera R, t we can transfer these coordinates in the local coordinate frame of the camera as

$$\boldsymbol{x} = (x, y, z)^T = R^T (\boldsymbol{x}^G - \boldsymbol{t}). \qquad (23)$$

According to our camera model as represented in Equation (2), this point gets projected to the pixel

$$(i, j)^T = \pi(\boldsymbol{x}) \qquad (24)$$

in the image. This projection is shown in Fig. 2a. We then define the projective point-to-point distance as a difference of the depth of the voxel and the observed depth at $(i,j)$, i. e.,

$$d_{point-to-point}(\boldsymbol{x}) := z - I_d(i, j). \qquad (25)$$

This distance is signed, i. e., negative values are assigned to voxels in front of the observed surface, and positive values to voxels behind.

In an alternative projective point-to-plane approach as illustrated in Fig. 2b, the normal of the surface is estimated. This can be achieved by transforming the coordinates of the voxel center $x^G$ to local coordinates in the current camera frame x and projecting these coordinates onto the image plane. This gives us the pixel coordinates $(i,j) = \pi(x)$ and the corresponding 3D point $y = \rho(i,j,I_d(i,j))$. Using the neighboring pixels, we can compute the tangent vectors

$$\boldsymbol{v}_1 = \rho\big(i + 1, j, I_d(i + 1, j)\big) - \rho\big(i, j, I_d(j, j)\big) \; and \qquad (26)$$

$$\boldsymbol{v}_2 = \rho\big(i, j + 1, I_d(i, j + 1)\big) - \rho\big(i, j, I_d(i, j)\big) \qquad (27)$$

and estimate the normal by taking the cross product

$$\boldsymbol{n} = \frac{\boldsymbol{v}_1 \times \boldsymbol{v}_2}{\|\boldsymbol{v}_1 \times \boldsymbol{v}_2\|}, \qquad (28)$$

as illustrated in Fig. 2b. Given the normal $n$, the point-to-plane distance can be computed as

$$d_{point-to-plane}(x) := (\boldsymbol{y} - \boldsymbol{x})^T \boldsymbol{n}. \qquad (29)$$

The projective point-to-plane distance is likewise signed, i. e., negative values refer to voxels in front of the surface and positive values to voxels behind.

The point-to-plane metric has the advantage over the projective point-to-point distance that it is more accurate even when the viewing angle is far from orthogonal to the surface.

The normal computation may be sensitive to the noise in the depth images, but this can be addressed by employing a bilateral filter with Gaussian kernels.

(e) Truncation and Weighting

Projective distance metrics are only approximations of true distance functions, and hence they can be highly erroneous, especially when the estimated distances are large. However, for tracking and reconstruction, we are in particular interested that a small band around the zero-crossing is accurately estimated in the SDF. Therefore, in a preferred embodiment we truncate the projected distances d and apply a weighting term that blends out large distances. For truncation, we may use the truncation function

$$d_{trunc} = \begin{cases} -\delta & if & d < -\delta \\ d & if & |d| \leq \delta \\ \delta & if & d > \delta \end{cases} \tag{30}$$

for some positive content $\delta$. Due to the truncation according to Equation (30), the gradient of the SDF will be zero in regions that are further away than the pre-determined constant $\delta$ from the estimated surface.

Furthermore, in a preferred embodiment, we may employ a weighting function to give higher weights to voxels in front of the observed surface and lower weights to voxels behind.

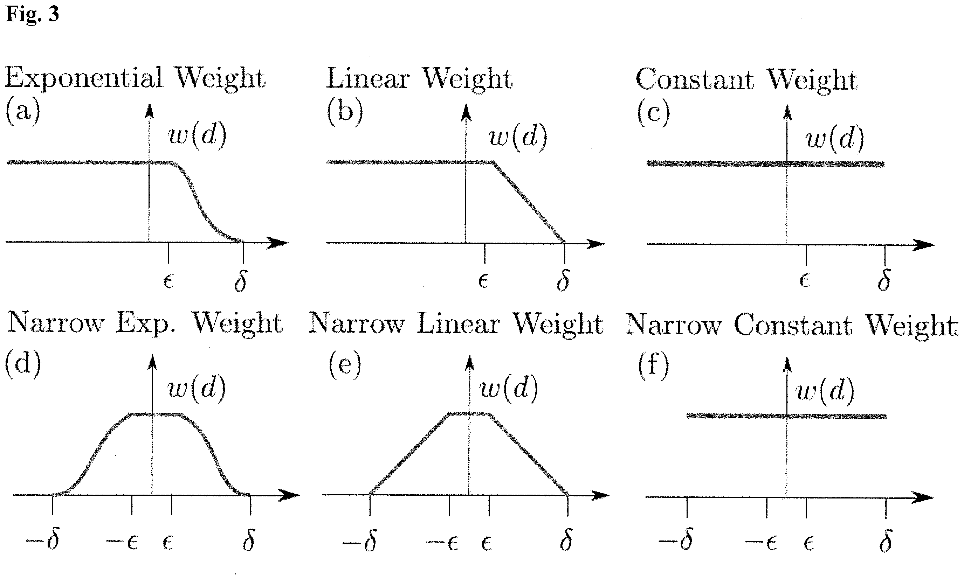

Depending on the observation model of the depth sensor, different weighting functions can be used in the context of the present invention. Six examples are illustrated in Fig. 3. The weight function shown in Fig. 3c assumes a constant weight $w_{const}(d) = 1$ for all voxels. This may be suitable for distance sensors that can deeply penetrate objects, such as radar.

Fig. 3b shows a linear weight function in which the weight linearly decreases to zero between given penetration depths $\varepsilon$ and $\delta$, for pre-determined constants $\varepsilon, \delta$, where $\delta > \varepsilon$.

$$w_{lin}(d) = \begin{cases} 1 & if & d < \varepsilon \\ \frac{\delta - d}{\delta - \varepsilon} & if & d \geq \varepsilon \text{ and } d \leq \delta. \\ 0 & if & d > \delta \end{cases}$$

$$\tag{31}$$

The linear model expresses a certain prior for the minimum depth $\delta$ of objects in the scene and a linear prior afterwards.

Fig. 3f and 3e show variations of the constant weight and linear weight functions, respectively. Fig. 3d shows a narrow weight with exponential rather than linear slopes on both sides.

Good results can be obtained with an exponential weighting function motivated by a Gaussian noise model of depth measurements, i. e.,

$$w_{exp}(d) = \begin{cases} 1 & if & d < \varepsilon \\ e^{-\sigma(d-\varepsilon)^2} & if & d \geq \varepsilon \text{ and } d \leq \delta, \\ 0 & if & d > \delta \end{cases} \tag{32}$$

for pre-determined positive parameters $\varepsilon, \delta$, where $\delta > \varepsilon$. This weighting function is shown in Fig. 3a. The inventors found that the exponential weighting function according to Equation (32) has a somewhat higher robustness than the linear weighting function according to Equation (31).

Particularly good results can be obtained with an exponential weighting function that assigns a minimum weight $w_{min} > 0$, e. g.,

$$w(d) = \begin{cases} 1 & if \ d \leq 0 \\ \max\left(w_{min}, exp - \left(\frac{d}{\sigma}\right)^2\right) & if \ d > 0 \end{cases} \tag{33}$$

In this way, small holes that stem from occlusions are automatically filled. Yet, the small weight ensures that the values can be quickly overwritten when better observation results become available. Good results have been achieved with the parameters $\delta$ = 0.02 m and $w_{min}$ = 0.01.

(f) Data Fusion and 3D Reconstruction

Given a sequence of (approximate) distance measurements and the weights for a particular voxel cell $x = (i,j,k)$, the objective is now to fuse all of these measurements to obtain the best possible estimate for the signed distance function $\psi(x)$. This estimation process can be carried out independently for each voxel.

Under the assumption that all distance measurements are normally distributed, this estimation problem can be formulated as follows. We seek the distance $\psi$ that maximizes the observation likelihood

$$p(d_1, w_1, \ldots, d_n, w_n \mid \psi) \propto \prod_{i=1}^{n} exp \left( \frac{1}{2} w_i (\psi - d_i)^2 \right)$$

$$(34)$$

where $d_i$ and $w_i$ refer to the observed truncated distances and weights in frame $i$, respectively. After taking the negative logarithm, we obtain a quadratic error function

$$L(\psi) = \sum_{i=1}^{n} \frac{1}{2} w_i (\psi - d_i)^2$$

$$(35)$$

that we aim to minimize. By putting the derivative of $L(\psi)$ to zero, we obtain

$$\psi = \frac{\sum_{i=1}^{n} w_i d_i}{\sum_{i=1}^{n} w_i} \qquad (36)$$

which means that the optimal $\psi$ is the weighted average of all measurements. This implies that we can calculate the estimated signed distance of each voxel as a running weighed average, i. e.,

$$D \leftarrow \frac{WD + w_{n+1} d_{n+1}}{W + w_{n+1}} \qquad (37)$$

$$W \leftarrow W + w_{n+1} . \qquad (38)$$

This computation can be carried out for each voxel. As each voxel does not depend on its neighbors, this update can easily be computed in parallel for all voxels on a standard graphics processor unit. For instance, in an exemplary implementation, the computation time per frame may be approximately 27 ms on a NVIDIA GeForce GTX 560 with 384 cores, and runs easily in real-time with 30 frames per second.

(g) Meshing and Colorization

The signed distance function $\psi$ encodes the three-dimensional geometry of the scene. As the surface is located at the zero crossing in the signed distance function, one may apply an implementation of the marching cubes algorithm to extract the corresponding triangle mesh. This approach is described in greater detail by William E. Lorensen, Harvey E. Cline, "Marching Cubes: A High Resolution 3D Surface Construction Algorithm", Computer Graphics 21 (4)163 to 169, 1987.

The invention may also involve an estimation of a color texture of the scene. The texture may be represented using an additional voxel grid consisting of three channels *R, G, B* for the color components red, green, blue, respectively and one additional channel for the color weights $W_c$. The computation can be carried out in parallel during the update step of the signed distance function, as described in Section (f) above. Given that a voxel is sufficiently close to the surface, i. e., $\|d\| < \varepsilon$ we retrieve the observed color

$$(r, g, b) \ = I_{RGB}(i, j) \qquad (39)$$

from the RGB image, and we may update the color estimates as a running average, i. e.,

$$R \leftarrow \frac{W_c R + w_c^{n+1} r}{W_c + w_c^{n+1}} \qquad (40)$$

$$G \leftarrow \frac{W_c G + w_c^{n+1} g}{W_c + w_c^{n+1}} \qquad (41)$$

$$B \leftarrow \frac{W_c B + w_c^{n+1} b}{W_c + w_c^{n+1}} \qquad (42)$$

where $w_c^{n+1}$ is the weight for the next measurement. As a weight, one may use

$$w_c^{n+1} = \cos \theta, \qquad (43)$$

where $\theta$ is the angle between the ray and the principal axis. The assignment according to Equation (43) gives more weight to pixels whose normal is pointing towards the camera. While extracting the triangle mesh using the marching cubes algorithm, one may query the color grid to compute colors for vertices using tri-linear interpolation.

(h) Applications to 3D Printing

The quick and highly accurate surface reconstruction as described in Sections (a) to (g) above can be employed in a real-time 3D scanner that allows scanning persons or objects in 3D space and then employing a 3D printer to print out the models.

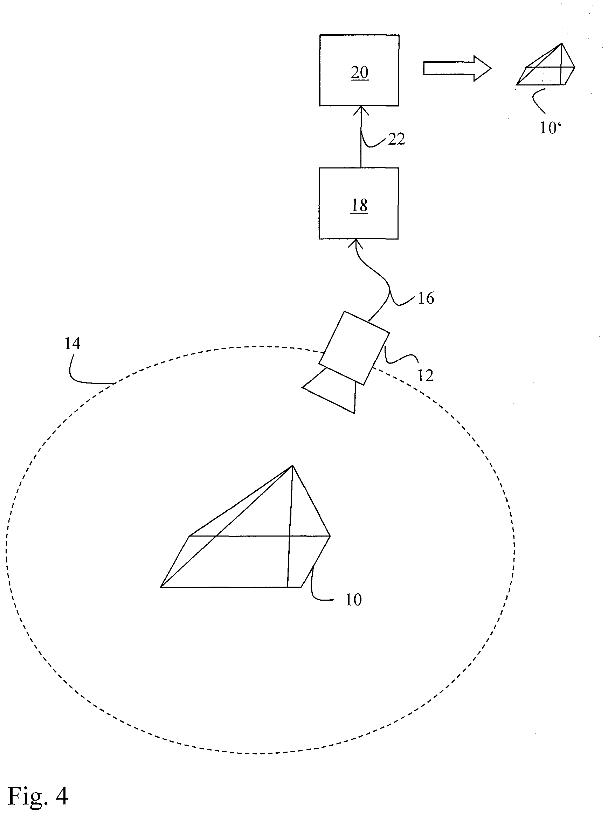

An exemplary setup is shown schematically in Fig. 4. An object 10 to be scanned and printed, such as a small toy pyramid 10 is placed on a stage. A camera 12 acquiring depth information alongside color information is moved around the surface of the object 10 along a trajectory 14 to capture an image of the object 10. For instance, the camera 12 may be Microsoft's Kinect camera. The camera 12 generates, at each time step, a color image $I_{RGB}$ and a depth image $I_d$, according to Equation (1). The acquired data may be sent via a camera data connection 16 to a data processing unit 18. The camera data connection 16 may be a wired connection or a wireless connection. The data processing unit 18 may be a laptop or desktop PC comprising a central processor unit (not shown) and a graphics processor unit (not shown). The data processing unit 18 is adapted to use the color image $I_{RGB}$ and depth image $I_d$ provided by the camera 12 to track the camera position by means of the signed distance function and to reconstruct a triangle mesh of the object 10 in accordance with the method described above in Sections (b) to (g).

For 3D printing applications, the reconstructed image of the object 10 is converted into printing instructions, which are provided to a 3D printer 20 via a printer data connection 22. The printer data connection 22 may again be a wireless connection or a wired connection. The printer 20 prints a 3D model 10' of the object 10 in accordance with the printing instructions.

As described above, the present invention allows the fitting of the image depth data provided by the camera 12 to the signed distance function to be performed quickly and with limited computational resources. This allows the 3D reconstruction to be performed in real-time on a standard off-the-shelf computer 18. For a grid resolution m = 256, the computation can be performed on a laptop or desktop computer 18 requiring only 128 MB of RAM on the GPU for the signed distance function and 256 MB for the color grid. The computation runs easily in real-time with 30 frames per second RGB-D data.

With the algorithm described above, one may obtain an estimate of the signed distance and color for every cell of the voxel grid. To display this model to the user, one may copy the data every two seconds from the graphics processor unit to the CPU (which consumes approximately 60ms) and may run a threaded CPU implementation of the Marching Cubes algorithm. The mesh generation takes around between 1000 and 1500 ms on a single CPU core. The resulting triangle mesh typically consists of approximately 200.000 to 500.000 vertices and faces. This information may be displayed together with the estimated camera trajectory to a user using Open GL. The method according to the present invention allows a live view of a colored 3D model to be shown during scanning on the monitor to provide live feedback to the user. Typically, scanning takes around 10 seconds (300 frames), while the full process typically consumes less than 1 minute on a normal laptop or desktop PC.

Fig. 4 shows a configuration in which the object 10 to be captured is static, and the camera 12 is moved around the object 10. However, it is evident from the description in Sections (a) to (g) that only the relative movement between the object 10 and the camera 12 is relevant for the invention. Hence, the invention can just as well be practiced in configurations where the camera 12 is static and the object 10 is rotated in front of the camera 12. For instance, a person sitting on a rotating chair may be rotated in front of a static RGB-D camera 12 to acquire a 3D model of the person.

(i) Turn detection

In an embodiment, the method according to the present invention allows detecting when a full 360° turn of the object 10 in front of the camera, or a full 360° turn of the camera 12 around the object 10 is complete. To achieve this, one may accumulate the angular motion of the camera, i. e., one may compute the motion between two consecutive frames and determine the rotation angle according to

$$\alpha_t = \cos^{-1}(trace(R_{t-1}^T R_t) - 1). \qquad (44)$$

Data acquisition may be terminated when $\sum_t \alpha_t > 2\pi$. In principle, the sum over the rotation angles may slightly overestimate the true rotation angle around the rotation axis. However, the inventors found this approach to work very well in practice, and to yield highly reliable results.

(j) Model Post-Processing

In an embodiment of the present invention, the data processing unit 18 may post-process the acquired mesh data to further facilitate 3D printing.

The triangle mesh acquired with the method according to the present invention (cf. Section (g)) may sometimes be unclosed, at positions where objects stick out of the reconstruction volume. This may in particular be the case at the bottom of the object, for which no triangles are generated. In order to address this problem, one may augment the signed distance function by an additional layer from all sides with $\psi = -\delta$, for some small positive constant $\delta$. For instance, one may set $\delta = 0.02$ m. This cutoff ensures that the triangle mesh is closed and watertight and hence ideally suited for 3D printing.

In an embodiment of the present invention, a stand may automatically be computed and added to the reconstruction of the object for 3D printing. To this end, one may first determine the center of mass $x_m$, $y_m$ by summing the positions of all voxel cells with $\psi = 0$, and the radius r of the model. Subsequently, one may add a cylindrical disk below the model by updating each cell $(x,y,z)$ of the signed distance function with $z < z_{base}$ according to

$$D = r - \sqrt{(x - x_m)^2 + (y - y_m)^2}. \qquad (45)$$

The model may also be carved automatically prior to printing. This allows reducing the printing costs by a factor of 5 or even more. To transform the reconstructed object into a hollow object, we transform the values in the signed distance function $\psi$ according to

$$\psi' = \begin{cases} s - \psi & if \ \psi > s/2 \\ \psi & otherwise \end{cases} \qquad (46)$$

for some small positive constant s (for instance, $s = 0.01m$). The transformation according to Equation (46) allows voxels that are located deeper than s within the object to be mapped to the outside. Given that the estimate of the signed distance function is only a coarse approximation, the transformation according to Equation (46) may sometimes lead to artifacts and unconnected components. This problem can be mitigated by re-computing the signed distance function with the correct signed distance value by finding the nearest neighbor from the pre-computed triangulated mesh. To speed up this computation, one may insert all vertices into an oct-tree structure and only update voxel cells within the object (i. e., cells with $\psi > 0$).

(k) Flow Diagram

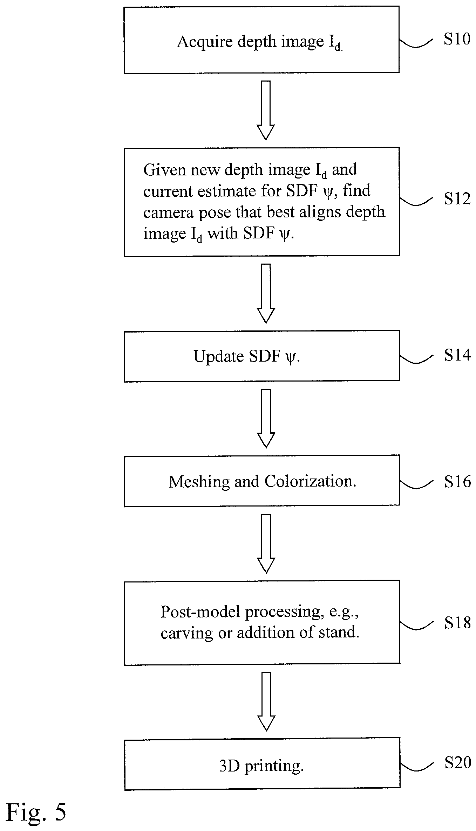

The flow diagram of Fig. 5 shows some of the steps in the method of three-dimensional surface reconstruction and three-dimensional printing according to an embodiment of the present invention.

In step S10, image depth data $I_d$ is acquired, possibly alongside color information $I_{RGB}$.

As the camera pose relative to the object changes, such as by rotation of the camera 12 around the object 10, new depth images $I_d$ are required at regular time intervals. Given a new depth image $I_d$ and the current estimate of the signed distance function $\psi$, the camera pose that best aligns the depth image $I_d$ with the signed distance function $\psi$ is determined (step S12).

In step S 14, after the current camera pose has been estimated, the signed distance function $\psi$ is updated.

The signed distance function encodes the three-dimensional geometry of the scene, and hence may be used for meshing and colorization (step S16), such as by implementing the marching cubes algorithm to extract the corresponding triangle mesh.

The resulting triangle mesh can then be subjected to post-model processing, such as carving or addition of the stand (step S18) before being transmitted to the printer for 3D printing (step S20).

The description of the preferred embodiments and the drawings merely serve to illustrate the invention and the advantageous effects it achieves, but should not be understood to imply any limitation. The scope of the invention is to be determined solely based on the appended claims.

Reference Signs

10      object to be scanned

10'     reconstructed printed object

12      camera

14      camera trajectory

16      camera data connection

18      data processing unit

20      3D printer

22      printer data connection

**Claims**

**1.** An apparatus for tracking and reconstructing three-dimensional objects, comprising:

a data processing unit (18), adapted to process image data provided by an image acquisition unit (12), said image data pertaining to a scene containing a three-dimensional object (10), wherein said image data comprises image depth data;

wherein said data processing unit (18) is adapted to compute a three-dimensional reconstruction of said object (10) from said image data in terms of a function that represents a surface of said object (10), wherein said function representing said surface is chosen such that said surface of said object (10) corresponds to an equipotential surface of said function; and

wherein said data processing unit (18) is adapted to determine a relative position of said image acquisition unit (12) with respect to said object (10) directly from fitting said image depth data provided by said image acquisition unit (12) to said function representing said surface;

wherein said data processing unit (18) is adapted to iteratively update said function representing said surface based on an observed relative position of said image acquisition unit (12) with respect to said object (10);

wherein said data processing unit (18) is adapted to update said function by maximizing an observation likelihood given in terms of a difference between a distance of said image acquisition unit (12) from said surface determined from said relative position and a corresponding distance between said image acquisition unit (12) and said surface, said corresponding distance being observed by means of said image acquisition unit (12), said maximization being conducted for said function;

wherein said difference is a weighted difference;

**characterized in that** said weights are Gaussian weights, wherein said weights are chosen such that they have a minimum value larger than zero, irrespective of a value of said difference.

2. The apparatus according to claim 1, wherein said data processing unit (18) is adapted to determine said relative position of said image acquisition unit (12) with respect to said object (10) by maximizing an observation likelihood given in terms of said position of said image acquisition unit (12) and said function representing said surface, said maximization being conducted for said position.

3. The apparatus according to any of the preceding claims, wherein said data processing unit (18) is adapted to carve an interior of said reconstruction of said object (10) by transforming said function representing said surface, in particular by transforming volumetric pixels located in an interior portion of said object (10) into volumetric pixels located externally of said object (10).

4. The apparatus according to any of the preceding claims, wherein said data processing unit (18) is adapted to determine a centre of mass of said object (10) from said reconstruction, wherein said centre of mass is in particular determined from said function representing said surface.

5. The apparatus according to any of the preceding claims, wherein said data processing unit (18) is adapted to add to said reconstruction of said object (10) a stand for said object (10), said stand being preferably centred at a position that corresponds to a vertical projection of a centre of mass of said object (10).

6. A computer-implemented method for tracking and reconstructing three-dimensional objects, comprising:

processing image data provided by an image acquisition unit (12), said image data pertaining to a scene containing a three-dimensional object (10), wherein said image data comprises image depth data;

computing a reconstruction of said object (10) from said image data in terms of a function that represents a surface of said object (10), wherein said function representing said surface is chosen such that said surface of said object (10) corresponds to an equipotential surface of said function;

determining a relative position of said image acquisition unit (12) with respect to said object (10) directly from fitting said image depth data provided by said image acquisition unit (12) to said function representing said surface; and

iteratively updating said function representing said surface based on an observed relative position of said image acquisition unit (12) with respect to said object (10);

wherein said updating comprises a step of maximizing an observation likelihood given in terms of a difference between a distance of said image acquisition unit (12) from said surface determined from said relative position and a corresponding distance observed by means of said image acquisition unit (12), said maximization being conducted for said function;

wherein said difference is a weighted difference;

**characterized in that** said weights are Gaussian weights, wherein said weights are chosen such that they have a minimum value larger than zero, irrespective of a value of said difference.

7. The method according to claim 6, wherein determining said relative position of said image acquisition unit (12) with respect to said object (10) comprises a step of maximizing an observation likelihood given in terms of said position of said image acquisition unit (12) and said function representing said surface.

8. A storage medium for storing computer-readable instructions, wherein said computer-readable instructions, when processed in a data processing unit (18), cause said processing unit (18) to implement a method according to any of the claims 6 or 7.

**Patentansprüche**

1.  Vorrichtung zum Verfolgen und Rekonstruieren drei-dimensionaler Objekte mit:

    einer Datenverarbeitungseinheit (18), welche dazu eingerichtet ist, von einer Bilderfassungseinheit (12) bereitgestellte Bilddaten zu verarbeiten, wobei die Bilddaten sich auf eine Szene, welche ein dreidimensionales Objekt (10) umfasst, beziehen und Bildtiefendaten umfassen;
    wobei die Datenverarbeitungseinheit (18) dazu eingerichtet ist, eine dreidimensionale Rekonstruktion des Objekts (10) aus den Bilddaten mittels einer Funktion, welche eine Oberfläche des Objekts (10) repräsentiert, zu berechnen, wobei die die Oberfläche repräsentierende Funktion derart ausgewählt ist, dass die Oberfläche des Objekts (10) einer Äquipotentialoberfläche der Funktion entspricht; und
    wobei die Datenverarbeitungseinheit (18) dazu eingerichtet ist, eine relative Position der Bilderfassungseinheit (12) bezüglich des Objektes (10) direkt aus einem Anpassen der von der Bilderfassungseinheit (12) bereitgestellten Bildtiefendaten an die die Oberfläche repräsentierende Funktion zu bestimmen;
    wobei die Datenverarbeitungseinheit (18) dazu eingerichtet ist, die die Oberfläche repräsentierende Funktion auf Grundlage einer beobachteten relativen Position der Bilderfassungseinheit (12) bezüglich des Objekts (10) iterativ zu aktualisieren;
    wobei die Datenverarbeitungseinheit (18) dazu eingerichtet ist, die Funktion durch Maximieren einer Beobachtungswahrscheinlichkeit, welche als Funktion eines Unterschieds zwischen einer Entfernung der Bilderfassungseinheit (12) von der Oberfläche, welche aus der relativen Position ermittelt ist, und einer entsprechenden Entfernung zwischen der Bilderfassungseinheit (12) und der Oberfläche, wobei die entsprechende Entfernung mittels der Bilderfassungseinheit (12) beobachtet ist, gegeben ist, zu aktualisieren, wobei die Maximierung nach der Funktion erfolgt;
    wobei der Unterschied ein gewichteter Unterschied ist;
    **dadurch gekennzeichnet, dass** die Gewichte Gaußsche Gewichte sind, wobei die Gewichte derart ausgewählt sind, dass sie unabhängig von einem Wert des Unterschieds einen Minimalwert größer als o aufweisen.

2.  Vorrichtung nach Anspruch 1, bei welcher die Datenverarbeitungseinheit (18) dazu eingerichtet ist, die relative Position der Bilderfassungseinheit (12) bezüglich des Objekts (10) durch Maximieren einer Beobachtungswahrscheinlichkeit, welche als Funktion der Position der Bilderfassungseinheit (12) und der die Oberfläche repräsentierenden Funktion gegeben ist, zu bestimmen, wobei die Maximierung nach der Position erfolgt.

3.  Vorrichtung nach einem der vorangehenden Ansprüche, bei welcher die Datenverarbeitungseinheit (18) dazu eingerichtet ist, ein Inneres der Rekonstruktion des Objektes (10) durch Transformieren der die Oberfläche repräsentierenden Funktion auszuhüllen, insbesondere durch Transformieren von Volumenpixeln, welche in einem inneren Abschnitt des Objekts (10) angeordnet sind, in Volumenpixel, welches außerhalb des Objekts (10) angeordnet sind.

4.  Vorrichtung nach einem der vorangehenden Ansprüche, bei welcher die Datenverarbeitungseinheit (18) dazu eingerichtet ist, einen Masseschwerpunkt des Objekts (10) aus der Rekonstruktion zu bestimmen, wobei der Masseschwerpunkt insbesondere aus der die Oberfläche repräsentierenden Funktion bestimmt ist.

5.  Vorrichtung nach einem der vorangehenden Ansprüche, bei welcher die Datenverarbeitungseinheit (18) dazu eingerichtet ist, der Rekonstruktion des Objektes (10) ein Podest für das Objekt (10) hinzuzufügen, wobei der Podest vorzugsweise an einer Position zentriert ist, welche einer Vertikalprojektion eines Masseschwerpunkts des Objekts (10) entspricht.

6.  Ein Rechner-implementiertes Verfahren zum Verfolgen und Rekonstruieren dreidimensionaler Objekte mit folgenden Schritten:

    Verarbeiten von durch eine Bilderfassungseinheit (12) bereitgestellten Bilddaten, wobei die Bilddaten sich auf eine Szene beziehen, welche ein dreidimensionales Objekt (10) umfasst, und Bildtiefendaten umfassen;
    Berechnen einer Rekonstruktion des Objektes (10) aus den Bilddaten mittels einer Funktion, welche eine Oberfläche des Objekts (10) repräsentiert, wobei die die Oberfläche repräsentierende Funktion derart ausgewählt ist, dass die Oberfläche des Objekts (10) einer Äquipotentialoberfläche der Funktion entspricht;
    Bestimmen einer relativen Position der Bilderfassungseinheit (12) bezüglich des Objekts (10) direkt aus einem Anpassen der von der Bilderfassungseinheit (12) bereitgestellten Bildtiefendaten an die die Oberfläche repräsentierende Funktion; und
    iteratives Aktualisieren der die Oberfläche repräsentierenden Funktion auf der Grundlage einer beobachteten relativen Position der Bilderfassungseinheit (12) bezüglich des Objektes (10);

wobei das Aktualisieren einen Schritt des Maximierens einer Beobachtungswahrscheinlichkeit, welche als Funktion eines Unterschieds zwischen einer Entfernung der Bilderfassungseinheit (12) von der Oberfläche, die aus der relativen Position bestimmt ist, und einer entsprechenden Entfernung, welche mittels der Bilderfassungseinheit (12) beobachtet wird, gegeben ist, umfasst, wobei die Maximierung nach der Funktion erfolgt;

wobei der Unterschied ein gewichteter Unterschied ist;

**dadurch gekennzeichnet, dass** die Gewichte Gaußsche Gewichte sind, wobei die Gewichte derart ausgewählt sind, dass sie unabhängig von einem Wert des Unterschieds einen Minimalwert größer als o aufweisen.

7. Verfahren nach Anspruch 6, wobei das Bestimmen der relativen Position der Bilderfassungseinheit (12) bezüglich des Objekts (10) einen Schritt des Maximierens einer Beobachtungswahrscheinlichkeit als Funktion der Position der Bilderfassungseinheit (12) und der die Oberfläche repräsentierenden Funktion umfasst.

8. Speichermedium zum Speichern rechnerlesbarer Instruktionen, wobei die rechnerlesbaren Instruktionen, wenn sie in einer Datenverarbeitungseinheit (18) ausgeführt werden, die Datenverarbeitungseinheit (18) dazu veranlassen, ein Verfahren nach einem der Ansprüche 6 oder 7 auszuführen.

**Revendications**

1. Appareil pour suivre et reconstruire des objets tridimensionnels, comprenant :

une unité de traitement de données (18), conçue pour traiter des données d'image fournies par une unité d'acquisition d'image (12), lesdites données d'image appartenant à une scène contenant un objet tridimensionnel (10), dans lequel lesdites données d'image comprennent des données de profondeur d'image ;

dans lequel ladite unité de traitement de données (18) est conçue pour calculer une reconstruction tridimensionnelle dudit objet (10) à partir desdites données d'image en termes d'une fonction qui représente une surface dudit objet (10), dans lequel ladite fonction représentant ladite surface est choisie de sorte que ladite surface dudit objet (10) corresponde à une surface équipotentielle de ladite fonction ; et

dans lequel ladite unité de traitement de données (18) est conçue pour déterminer une position relative de ladite unité d'acquisition d'image (12) par rapport au dit objet (10) directement en ajustant lesdites données de profondeur d'image fournies par ladite unité d'acquisition d'image (12) à ladite fonction représentant ladite surface ;

dans lequel ladite unité de traitement de données (18) est conçue pour mettre à jour de manière itérative ladite fonction représentant ladite surface sur la base d'une position relative observée de ladite unité d'acquisition d'image (12) par rapport au dit objet (10) ;

dans lequel ladite unité de traitement de données (18) est conçue pour mettre à jour ladite fonction en augmentant à un maximum une probabilité d'observation donnée en termes d'une différence entre une distance de ladite unité d'acquisition d'image (12) par rapport à ladite surface déterminée à partir de ladite position relative et une distance correspondante entre ladite unité d'acquisition d'image (12) et ladite surface, ladite distance correspondante étant observée au moyen de ladite unité d'acquisition d'image (12), ladite augmentation à un maximum étant effectuée pour ladite fonction ;

dans lequel ladite différence est une différence pondérée ;

**caractérisé en ce que** lesdits coefficients de pondération sont des coefficients de pondération gaussiens, dans lequel lesdits coefficients de pondération sont choisis de sorte qu'ils aient une valeur minimum supérieure à zéro, indépendamment d'une valeur de ladite différence.

2. Appareil selon la revendication 1, dans lequel ladite unité de traitement de données (18) est conçue pour déterminer ladite position relative de ladite unité d'acquisition d'image (12) par rapport au dit objet (10) en augmentant à un maximum une probabilité d'observation donnée en termes de ladite position de ladite unité d'acquisition d'image (12) et de ladite fonction représentant ladite surface, ladite augmentation à un maximum étant effectuée pour ladite position.

3. Appareil selon l'une quelconque des revendications précédentes, dans lequel ladite unité de traitement de données (18) est conçue pour découper un intérieur de ladite reconstruction dudit objet (10) en transformant ladite fonction représentant ladite surface, en particulier en transformant les pixels volumétriques situés dans une partie intérieure dudit objet (10) en des pixels volumétriques situés à l'extérieur dudit objet (10).

4. Appareil selon l'une quelconque des revendications précédentes, dans lequel ladite unité de traitement de données (18) est conçue pour déterminer un centre de masse dudit objet (10) à partir de ladite reconstruction, dans lequel ledit centre de masse est en particulier déterminé à partir de ladite fonction représentant ladite surface.

5. Appareil selon l'une quelconque des revendications précédentes, dans lequel ladite unité de traitement de données (18) est conçue pour ajouter, à ladite reconstruction dudit objet (10), un socle pour ledit objet (10), ledit socle étant de préférence centré à une position qui correspond à une projection verticale d'un centre de masse dudit objet (10).

6. Procédé mis en oeuvre par un ordinateur pour suivre et reconstruire des objets tridimensionnels, comprenant :

le traitement de données d'image fournies par une unité d'acquisition d'image (12), lesdites données d'image appartenant à une scène contenant un objet tridimensionnel (10), dans lequel lesdites données d'image comprennent des données de profondeur d'image ;

le calcul d'une reconstruction dudit objet (10) à partir desdites données d'image en termes d'une fonction qui représente une surface dudit objet (10), dans lequel ladite fonction représentant ladite surface est choisie de sorte que ladite surface dudit objet (10) corresponde à une surface équipotentielle de ladite fonction ;

la détermination d'une position relative de ladite unité d'acquisition d'image (12) par rapport au dit objet (10) directement à partir de l'ajustement desdites données de profondeur d'image fournies par ladite unité d'acquisition d'image (12) à ladite fonction représentant ladite surface ; et

la mise à jour de manière itérative de ladite fonction représentant ladite surface sur la base d'une position relative observée de ladite unité d'acquisition d'image (12) par rapport au dit objet (10) ;

dans lequel ladite mise à jour comprend une étape d'augmentation à un maximum d'une probabilité d'observation donnée en termes d'une différence entre une distance de ladite unité d'acquisition d'image (12) par rapport à ladite surface déterminée à partir de ladite position relative et une distance correspondante observée au moyen de ladite unité d'acquisition d'image (12), ladite augmentation à un maximum étant effectuée pour ladite fonction ;

dans lequel ladite différence est une différence pondérée ;

**caractérisé en ce que** lesdits coefficients de pondération sont des coefficients de pondération gaussiens, dans lequel lesdits coefficients de pondération sont choisis de sorte qu'ils aient une valeur minimum supérieure à zéro, indépendamment d'une valeur de ladite différence.

7. Procédé selon la revendication 6, dans lequel la détermination de ladite position relative de ladite unité d'acquisition d'image (12) par rapport au dit objet (10) comprend une étape d'augmentation à un maximum d'une probabilité d'observation donnée en termes de ladite position de ladite unité d'acquisition d'image (12) et de ladite fonction représentant ladite surface.

8. Support de mémorisation pour mémoriser des instructions pouvant être lues par un ordinateur, dans lequel lesdites instructions pouvant être lues par un ordinateur, lorsqu'elles sont traitées dans une unité de traitement de données (18), amènent ladite unité de traitement (18) à mettre en oeuvre un procédé selon l'une quelconque des revendications 6 et 7.

EP 2 808 842 B1

**Fig. 1**

observed surface $I_d$ at time n+1

reconstructed surface at time $n$

$\boldsymbol{\xi}_{n+1}$

$\boldsymbol{\xi}_n$

$\boldsymbol{\xi}_{n-1}$

$\cdots$

$\boldsymbol{\xi}_1$

$\boldsymbol{\xi}_0$

$\psi(\mathbf{x}) > 0$

$\psi(\mathbf{x}) = 0$

$\psi(\mathbf{x}) < 0$

Fig. 2a

Fig. 2b

**Fig. 3**

Exponential Weight
(a)

Linear Weight
(b)

Constant Weight
(c)

Narrow Exp. Weight
(d)

Narrow Linear Weight
(e)

Narrow Constant Weight
(f)

EP 2 808 842 B1

Fig. 4

```
┌─────────────────────────────────┐
│     Acquire depth image I_d.     │ ⌇ S10
└─────────────────────────────────┘
                 ⇓
┌─────────────────────────────────┐
│ Given new depth image I_d and    │
│ current estimate for SDF ψ, find │
│ camera pose that best aligns depth│ ⌇ S12
│ image I_d with SDF ψ.            │
└─────────────────────────────────┘
                 ⇓
┌─────────────────────────────────┐
│         Update SDF ψ.            │ ⌇ S14
└─────────────────────────────────┘
                 ⇓
┌─────────────────────────────────┐
│     Meshing and Colorization.    │ ⌇ S16
└─────────────────────────────────┘
                 ⇓
┌─────────────────────────────────┐
│  Post-model processing, e.g.,    │
│  carving or addition of stand.   │ ⌇ S18
└─────────────────────────────────┘
                 ⇓
┌─────────────────────────────────┐
│         3D printing.             │ ⌇ S20
└─────────────────────────────────┘
```

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. KÜMMERLE ; G. GRISETTI ; H. STRASDAT ; K. KONOLIGE ; W. BURGARD.** g2o: A general framework for graph optimization. *ICRA,* 2011
- **K.M. WURM ; A. HORNUNG ; M. BENNEWITZ ; C. STACHNISS ; W. BURGARD.** OctoMap: A probabilistic, flexible, and compact 3D map representation for robotic systems. *Workshop on Best Practice in 3D Perception and Modeling for Mobile Manipulation at ICRA,* 2010
- **P. HENRY ; M. KRAININ ; E. HERBST ; X. REN ; D. FOX.** *RGB-D mapping: Using depth cameras for dense 3D modeling of indoor environments,* 2010
- **F. ENDRES ; J. HESS ; N. ENGELHARD ; J. STURM ; D. CREMERS ; W. BURGARD.** An evaluation of the RGB-D SLAM systems. *ICRA,* May 2012
- **J. STURM ; N. ENGELHARD ; F. ENDRES ; W. BURGARD ; D. CREMERS.** A benchmark for evaluation of RGB-D SLAM systems. *IROS,* 2012
- **R.A. NEWCOMBE ; S. IZADI ; O. HILLIGES ; D. MOLYNEAUX ; D. KIM ; A.J. DAVISON ; P. KOHLI ; J. SHOTTON ; S. HODGES ; A.W. FITZGIBBON.** KinectFusion: Real-time dense surface mapping and tracking. *ISMAR,* 2011, 127-136
- **D.R. CANELHAS.** Scene Representation, Registration and Object Detection in a Truncated Signed-Distance Function Representation of 3D Space. Orebro University, 2012
- **B. CURLESS ; M. LEVOY.** A Volumetric Method for Building Complex Models from Range Images. *Computer Graphics Proceedings,* 1996, 303-312
- **WILLIAM E. LORENSEN ; HARVEY E. CLINE.** Marching Cubes: A High Resolution 3D Surface Construction Algorithm. *Computer Graphics,* 1987, vol. 21 (4), 163-169